Europäisches Patentamt

European Patent Office

Office européen des brevets

(11) Veröffentlichungsnummer: **0 442 042 A2**

## (12) EUROPÄISCHE PATENTANMELDUNG

(21) Anmeldenummer: 90121195.3

(51) Int. Cl.5: **H01M 8/04**

(22) Anmeldetag: 06.11.90

(30) Priorität: 16.02.90 DE 4004896

(43) Veröffentlichungstag der Anmeldung:
**21.08.91 Patentblatt 91/34**

(84) Benannte Vertragsstaaten:
**AT CH DE FR GB IT LI NL SE**

(71) Anmelder: **VARTA Batterie Aktiengesellschaft**
**Am Leineufer 51**
**W-3000 Hannover 21(DE)**

(72) Erfinder: **Winsel, August, Prof. Dr., Dipl.-Phys.**
**Fasanenstrasse 8**
**W-6233 Kelkheim(DE)**

(74) Vertreter: **Kaiser, Dieter Ralf, Dipl.-Ing.**
**Gundelhardtstrasse 72**
**W-6233 Kelkheim/Ts.(DE)**

(54) **Batterie von Wasserstoff/Sauerstoff-Brennzellen.**

(57) Die Betriebssicherheit einer $H_2/O_2$-Brennstoffzellenbatterie, deren positive Elektroden zu aufeinanderfolgenden Gruppen mit paralleler Gasversorgung (sog. Kaskadenschaltung) geordnet sind, wird erhöht, indem an Übergängen von einer Elektrodengruppe zur nächsten $H_2/O_2$-Rekombinatoren im Gasweg vorgesehen sind, an denen in die Sauerstoffkaskade eingedrungener Wasserstoff abgebaut werden kann. welcher sonst in positiven Brennstoffzellenelelektroden mit $O_2$-spezifischen Katalysatoren nicht umsetzbar ist und diese wie ein Intergas belastet. Zusätzliche Ausstattung der Rekombinatoren mit Temperatursensoren erlaubt eine Funktionskontrolle des Systems. Die Rekombinatoren lassen sich durch einen Wärmeaustausch mit dem Elektrolyt- oder Kühlwasserkreislauf kühlen und durch einen Wasserdampfaustausch zwischen dem Gasstrom und den Flüssigkeitsströmen mittels einer hydrophoben Trennungsmembran trocknen.

EP 0 442 042 A2

# BATTERIE VON WASSERSTOFF/SAUERSTOFF-BRENNZELLEN

Die Erfindung betrifft eine Batterie von Wasserstoff/Sauerstoff-Brennstoffzellen, in der jede Gaselektrode eine Gaszuführung und eine Gasabführung besitzt, und deren Sauerstoffelektroden in Gruppen parallel versorgter und parallel entsorgter Elektroden angeordnet sind, wobei das Gas einer ersten Gruppe Zugeführt wird, aus deren Auslässen stets eine folgende Gruppe gespeist wird.

Am bekanntesten unter den Brennstoffzellen sind die Wasserstoff/Sauerstoff-Brennstoffzellen, in denen die chemische Energie der Wasserstoffverbrennung mit Sauerstoff direkt in elektrische Energie umgewandelt wird. Dabei wird an der Wasserstoffanode $H_2$ unter Freisetzung von zwei Elektronen in zwei Protonen überführt, während an der Sauerstoffelektrode zwei Elektronen zur Bildung eines doppelt negativ geladenen Sauerstoffions verbraucht werden. Die Elektronen werden über einen äußeren Verbraucher geleitet und geben dort ihre Energie als nutzbare Arbeitsleistung ab. Derartige Brennstoffzellen besitzen alkalische oder saure Elektrolyte,die frei beweglich oder in saugfähigen Separatoren festgelegt sind. Der Elektrolyt kann auch aus einer Ionenaustauschermembran bestehen.

Wasserstoff/Sauerstoff- Brennstoffzellen können jedoch auch mit schmelzflüssigen Elektrolyten arbeiten, oder der Elektrolyt besteht aus einem festen Sauerstoffionenleiter (Lambdasonde zur Ermittlung der Abgaszusammensetzung).

Bei der elektrochemischen Umsetzung eines Gases werden aus Gasmolekülen unter Austausch von Elektronen mit dem Elektrodenkörper Ionen des Elektrolyten gebildet oder entladen, wozu eine Dreiphasengrenze notwendig ist. Um lange Dreiphasengrenzen zu erzielen, verwendet man als Gaselektroden poröse Körper, in denen man entweder durch Differenzdruck zwischen Gas und Elektrolyt oder durch unterschiedliche Benetzungsfähigkeit einen Teil der Poren mit Gas, den anderen Teil mit Elektrolyt beaufschlagt, d.h. Gasdiffusionselektroden sind im allgemeinen poröse Körper mit zwei sich durchdringenden Porensystemen, von denen das eine mit Gas, das andere mit Elektrolyt erfüllt ist. Namentlich Wasserstoff reagiert jedoch nicht an jedem Elektrodenmaterial, wenn es nur elektronenleitend ist. Vielmehr muß das Elektrodenmaterial katalytische Fähigkeiten besitzen. Diese wird im allgemeinen bei Metallen der Platingruppe und den Unedelmetallen der achten Spalte des periodischen Systems der Elemente gefunden. Nikkel, besonders in der Form des Raneymetalls, ist ein guter Katalysator für die anodische Wasserstoffoxidation. Sauerstoffelektroden verwenden im allgemeinen Silber, Kohlenstoff, Manganoxid oder auch Pyrolyse-Produkte organischer Verbindungen wie des Phthalocyanins als Katalysatoren.

Um bei Gasüberdruck Entweichen des Gases in den Elektrolyten zu vermeiden, wird oft elektrolytseitig eine feinporige, durchgehend hydrophile Schicht verwendet, die nur Elektrolytporen und keine Gasporen enthält. Häufig trifft man Konstruktionen an, die bei vermindertem Gasdruck auf der geschilderten biporösen Struktur eine vollständig hydrophobe poröse Gasleitschicht aufweisen. Da elektrochemisch nicht aktive Gasbestandteile beim Betrieb im Porensystem angereichert werden, führen sie zur Erstickung der Reaktion und zum Zusammenbruch der stromliefernden Reaktion.

Gegen dieses Problem ist die gleichmäßige Überströmung der Elektrodenfläche mit dem Reaktionsgas wirksam gefunden. Versorgt man mehrere Elektroden hintereinander mit dem Gas, so werden inerte Bestandteile mitgeführt und sammeln sich in der letzten Elektrode. wo sie sich in einer erhöhten Polarisation bemerkbar machen. Überschreitet die Polarisation einen bestimmten Höchstwert im Vergleich zur Polarisation der anderen Elektroden. so öffnet man ein Ventil und bläst das Inertgaspolster aus. Bei Elektroden, die hinsichtlich der Gasströmung in Serie versorgt werden, jedoch elektrisch parallel geschaltet sind, macht sich die Erstickung durch ein sich ansammelndes Inertgaspolster in der letzten Elektrode der Strömungsreihe durch eine Verminderung des Stromes bemerkbar, die ebenfalls zum Initiieren des Schaltens eines Abgasventiles benutzt wird.

Für die Entsorgung einer größeren Batterie, ist eine Inertgaskaskade bekannt. Dabei sind alle Elektroden einer Batterie, die aus einer Vielzahl von Einzelzellen besteht, in Gruppen mit fallender Anzahl von Elektroden angeordnet, d.h., die erste Gruppe enthält die überwiegende Zahl der Elektroden der Batterie, sie bekommen das Gas parallel zugeführt. Das Abgas dieser Elektroden wird zusammenfassend einer zweiten Gruppe parallel versorgter Elektroden mit kleinerer Elektrodenzahl zugeführt; deren Abgas geht in eine dritte Gruppe mit weiter verringerter Elektrodenzahl. Jede nachfolgende Gruppe saugt also gewissermaßen das Gas aus den Elektroden der vorhergehenden ab und sorgt somit für eine sichere Überströmung, eine sichere Abführung der Inertgase, die von Stufe zu Stufe der Kaskade angereichert werden. Die letzte Stufe der Kaskade ist eine Einzelzelle, die möglicherweise in der Zahl parallel geschalteter Elektroden zur Verringerung der Stromdichte noch verbreitert ist. In dieser Endzelle sammeln sich alle Inertgase und machen sich durch eine wachsende Erstickung bemerkbar. Vergleicht man die Spannung dieser Zelle mit dem Durchschnitt der übrigen oder mit einer ausgewählten der übrigen, so kann man die Spannungsabweichung sehr einfach zum Regeln der Abgasströmung benutzen.

Um die Leistungsfähigkeit der Brennstoffzellen zu erhöhen, hat man den Innenwiderstand wesentlich verringert. Dieses geschah besonders durch Verringerung der Dicke des Elektrolyten, bzw. des Diaphragmas, in dem der Elektrolyt zwischen den beiden Elektroden angeordnet ist. Infolge der Löslichkeit und der relativ guten Beweglichkeit des gelösten Gases kommt es zu einer Diffusion von Wasserstoff in die Sauerstoffelektroden und umgekehrt von Sauerstoff in die Wasserstoffelektroden. Eine kleine gegenseitige Verunreinigung ist auch durch Strömung über Undichtigkeiten der Diaphragmen möglich. Welche Katalysatoren auch immer die Wasserstoffelektroden enthalten: Gelangt Sauerstoff in den Wasserstoff, so wird er unmittelbar abreagiert zu Wasser. Diese Kurzschlußreaktion ist mit Wärmeentwicklung verbunden. Dasselbe geschieht auch mit Wasserstoff, wenn die Sauerstoffelektroden Platin oder Palladium als Katalysator enthalten. In den hochaktiven Silber- und Kohleelektroden jedoch verhält sich der Wasserstoff wie ein Inertgas, d. h. er wird nicht umgesetzt, sondern von dem Strom des Reaktionsgases in der vorher geschilderten Weise mitgeführt.

Um unkontrollierte Wärmeentwicklungen durch überdiffundierenden Sauerstoff in den Wasserstoffelektroden zu verhindern, wird oft der Wasserstoffdruck um etwa 0,1 mbar höher gesetzt als der Sauerstoffdruck. Dieses hat zur Folge, daß etwaige Undichtigkeiten, die zu einer Durchmischung des Gases führen können, immer nur Wasserstoff in die Sauerstoffelektroden liefern, wo er sich inert verhält. während umgekehrt eine Sauerstoffströmung in die Wasserstoffelektroden nicht möglich ist. Durch diese Maßnahme wird die Betriebssicherheit erheblich erhöht. Eine Folge dieser Maßnahme ist aber auch, daß Wasserstoff als Inertgas sich innerhalb der Kaskade anreichert und zu Versorgungsproblemen der letzten Zellen führen kann.

Der Erfindung liegt die Aufgabe zugrunde, eine Brennstoffzellenbatterie der eingangs genannten Gattung anzugeben, bei welcher unter Betriebsbedingungen, die eine unerwünschte und nicht kontrollierbare Einschleusung von Wasserstoffgas in die Sauerstoffkaskade ermöglichen könnten eine Anreicherung des Sauerstoffstromes zumindest mit diesem Inertgas unterbleibt.

Die Aufgabe wird erfindungsgemäß mittels einer Brennstoffzellenbatterie gelöst. wie sie im Patentanspruch 1 difiniert ist.

Erfindungsgemäß werden daher Rekombinationskatalysatoren, wie sie etwa bei wartungsfreien Bleiakkumulatoren zur Rückgewinnung von Wasser aus den Elektrolysegasen verwendet werden, eingesetzt, um vom Gasfluß des Sauerstoffs aufgenommene $H_2$-Mengen stromlos zu Wasser umzusetzen. Das gebildete Wasser wird dem Elektrolyten zugeführt.

Die Rekombinationskatalysatoren sind zu diesem Zweck in Gaswegen angeordnet, welche die Übergänge von einer parallel mit Gas versorgten Elektrodengruppe zur nächsten innerhalb der Sauerstoffkaskade bilden, d.h. in ihren Knotenpunkten. Auf diese Weise wird das von einer ersten Gruppe in eine zweite Gruppe fließende Sauerstoffgas durch einen zwischengeschalteten Rekombinator gereinigt, so daß die Elektroden der zweiten Gruppe ohne Ballast - abgesehen von anderen anwesenden Inertgasen wie z.B. $N_2$, arbeiten können.

Die erfindungsgemäße Maßnahme ist besonders vorteilhaft, wenn die Sauerstoffelektroden einen der weiter vorn bereits genannten spezifischen Sauerstoffkatalysatoren enthalten, die Wasserstoff nicht umsetzen können und damit seine Anreicherung in der Sauerstoffkaskade nicht verhindern.

Demgegenüber handelt es sich bei den Rekombinationskatalysatoren gemäß der Erfindung um Wasserstoff-spezifische Katalysatoren, wie sie üblicherweise auch in den Wasserstoffelektroden der Brennstoffelemente vom Typ der Knallgaszelle enthalten sind. Das Katalysatorenmetall ist daher in der Regel ein Edelmetall der 8. Nebengruppe des Periodensystems, da das Metall nicht mit einer festen Oxidschicht gegen das Gas abgedeckt sein darf. Das Metall befindet sich auf einem elektrolytbeständigen Träger, beispielsweise aus $Al_2O_3$, $TiO_3$ oder MgO, der hydrophobiert ist. Zum Zwekke der Hydrophobierung hat sich ein reaktives Mischen des Trägermaterials mit PTFE-Pulver und Auswalzen der Struktur zu einem Katalysatorfell bewährt. Dieses wird dann bevorzugt in die Maschen eines Metallnetzes eingewalzt oder einpastiert.

Man kann den Rekombinator jedoch auch dadurch herstellen, daß man eine Sauerstoffelektroden-Struktur der eingangs beschriebenen Art mit dem Katalysatormetall, zum Beispiel mit Platin oder Palladium, durch galvanische oder chemische Abscheidung aus Lösungen der Chloride in bekannter Weise belädt.

Durch die erfindungsgemäße Anordnung von Rekombinationskatalysatoren an den Übergangsstellen des Gasstromes von einer Elektrodengruppe zur nächsten innerhalb der Sauerstoffkaskade wird nicht nur die Leistung der Batterie gesteigert, sondern auch die Betriebssicherheit erhöht, da andernfalls die Anreicherung von Wasserstoff als Inertgas in der Kaskade zu Versorgungsproblemen der letzten Zellen führen kann.

Da die Wasserstoff/Sauerstoff-Rekombination unter Wärmeentwicklung abläuft, läßt sich die Erfindung für zwei weitere vorteilhafte Maßnahmen nutzen:

Erstens kann man durch Überwachung der Rekombinatortemperaturen die Betriebssicherheit überwachen und eventuell während des Betriebes auftretende Undichtigkeiten im System identifizieren und lokalisieren. Zu diesem Zweck ist es günstig, die Rekombinationskatalysatoren mit Temperatursensoren auszustatten.

Zweitens verbleibt die Reaktionswärme im System, besonders wenn man bei Batterien mit Elektrolytumwälzung den Elektrolytkreislauf zur Kühlung der Rekombinatoren in die Zellblöcke integriert, so daß sie im Wärmeaustausch mit dem die Zellen durchfließenden Elektrolyten stehen.

Das andere Produkt, das neben der Wärme bei der katalytischen Verbrennung der Wasserstoffverunreinigungen im Sauerstoff entsteht, nämlich Wasser, kann als Feuchtigkeit im Sauerstoffstrom verbleiben, wenn seine Menge nicht die Sättigungskonzentration überschreitet. Auf diese Weise wird es in die nächste Zellgruppe mitgeführt und vom Elektrolyten in den Zeilen wie auch das elektrochemisch dort entstehende Reaktionswasser aufgenommen. Seine Elimination erfordert keine Maßnahmen, die über jene zur Abführung des Reaktionswassers aus den Zellen zur Erhaltung einer möglichst konstanten Elektrolytkonzentration hinausgehen.

Bei sehr kompakter Bauweise der Rekombinatoren. die in jedem Fall erstrebenswert ist. kann es jedoch infolge höherer Wasserstoffkonzentrationen zur Entstehung zu großer Wassermengen und damit zur Tropfenbildung kommen.

Eine prinzipielle Abhilfe für diese Feuchtigkeitsansammlung besteht erfindungsgemäß darin, daß ein Wasserdampfaustausch entweder mit dem die Zellen durchfließenden Elektrolyten oder mit einem vorgesehenen Kühlwasserkreislauf zustandekommt.

Im ersten Fall kann man das Gas im Rekombinator dadurch trocknen, daß man es an einer porösen, vom Elektrolyten nicht benetzbaren Membran vorbeiführt, die auf der anderen Seite vom Elektrolyten der Batterie umspült wird. Der Wasserdampfüberschuß diffundiert in diesem Fall durch die Membran hindurch und kondensiert in der angrenzenden Elektrolytlösung, wobei sich die durch Temperatur und Elektrolytkonzentration vorgegebene Feuchte automatisch im Gas einstellt. Zur mechanischen Stabilisierung kann die hydrophobe Membran elektrolytseitig mit einer metallischen Verstärkung in Form eines Netzes, Streck- oder Sintermetalls sandwichartig verbunden sein.

Zum zweiten Fall kann die Trocknung mit Hilfe eines Kühlmittelkreislaufes erfolgen, den man zur Wärme- und Wasserausbringung aus den Brennstoffzellen installiert hat. Besonders bei sogenannten Elofluxzellen nach DE-PS 11 64 525 kann man auf einen Elekrolytkreislauf verzichten, wenn man eine oder beide Endflächen jeder Zelle mit einer hydrophoben porösen Schicht abschließt, die auf der anderen Seite mit dem Kühlwasser kontaktiert ist. In einer solchen Batterie sorgt der Wasserkreislauf für eine Homogenisierung der Temperatur und Feuchte in Zellen und Rekombinatoren. Der Kühlwasserkreislauf bietet sich somit neben dem Elektrolytkreislauf zugleich als alternatives Mittel an. um den Rekombinatoren Wärme zu entziehen.

In manchen Brennstoffzellen ist der Elektrolyt in der Zell- und Elektodenmatrix festgelegt. Dort dienen Gaskreisläufe zur Ausbringung von Wärme und Wasser der Reaktion, indem man in den Kreislauf des Kühlgases einen Gastrockner einschaltet. Handelt es sich bei diesem Kreislauf um den des Sauerstoffs, so kann die Entsorgung der Rekombinationskatalysatoren mit diesem Kreislauf erfolgen.

Generell läßt sich nach dem Vorstehenden die Reaktionswärme der Rekombinatoren mit einer unporösen Kühlfläche, das Reaktionswasser mit einer hydrophoben Membranfläche abführen.

**Patentansprüche**

1.  Batterie von Wasserstoff/Sauerstoff-Brennstoffzellen, in der jede Gaselektrode eine Gaszuführung und eine Gasabführung besitzt, und deren Sauerstoffelektroden in Gruppen parallel versorgter und parallel entsorgter Elektroden angeordnet sind, wobei das Gas einer Gruppe zugeführt wird, aus deren Auslässen stets eine folgende Gruppe gespeist wird. dadurch gekennzeichnet. daß in den Ent- bzw. Versorgungsleitungen zwischen den Gruppen Wasserstoff/Sauerstoff-Rekombinationskatalysatoren angeordnet sind. in denen Wasserstoffbestandteile des Sauerstoffgases mit Sauerstoff katalytisch zu Wasser rekombiniert werden.

2.  Batterie nach Anspruch 1, dadurch gekennzeichnet, daß die Rekombinationskatalysatoren mit Temperatursensoren ausgestattet sind.

3.  Batterie nach Anspruch 1, dadurch gekennzeichnet, daß die Rekombinationskatalysatoren im Wärmeaustausch mit dem die Zellen durchfließenden Elektrolyten stehen.

4.  Batterie nach Anspruch 1, dadurch gekennzeichnet, daß die Rekombinationskatalysatoren im Wasserdampfaustausch mit dem die Zellen durchfließenden Elektrolyten stehen.

5.  Batterie nach Anspruch 1, dadurch gekennzeichnet. daß die Rekombinationskatalysatoren im Wärmeaustausch mit dem die Zellen kühlenden Wasserkreislauf stehen.

6. Batterie nach Anspruch 1, dadurch gekennzeichnet, daß die Rekombinationskatalysatoren im Wasserdampfaustausch mit dem die Zellen kühlenden Wasserkreislauf stehen.